# EUROPÄISCHE PATENTANMELDUNG

(11) **EP 0 818 429 A1**
(43) Veröffentlichungstag der Anmeldung: **14.01.1998**
(21) Anmeldenummer: 97107627.8
(22) Anmeldetag: 09.05.1997
(51) Int. Cl.: C04B 30/00, C04B 38/06

(54) **Mischung und Verfahren zur Herstellung wärmedämmender Formkörper**

(30) Priorität: 10.05.1996 DE 19618968
(71) Anmelder: Wacker-Chemie GmbH, 81737 München (DE)
(72) Erfinder: Eyhorn, Thomas, 87452 Altusried (DE); Kratel, Günter, Dr., 87471 Durach (DE); Rell, Andreas, 87448 Waltenhofen (DE)

(57) **Zusammenfassung**

Gegenstand der Erfindung ist eine Mischung zur Herstellung eines wärmedämmenden Formkörpers enthaltend 20 bis 99 Gew.-% mikroporöses, oxidisches anorganisches Material, 0 bis 50 Gew.-% Trübungsmittel, 0 bis 50 Gew.-% Fasermaterial, 0 bis 15 Gew.-% anorganisches Bindematerial und einen brennbaren Bestandteil, der bei einer Wärmebehandlung unter Zurücklassung von Poren nahezu rückstandsfrei verbrennt. Gegenstand der Erfindung ist auch ein Verfahren zur Herstellung des Formkörpers.

## Beschreibung

Die Erfindung betrifft eine Mischung, die mikroporöses, oxidisches anorganisches Material und gegebenenfalls Trübungsmittel, Fasermaterial und anorganisches Bindematerial enthält und zu einem wärmedämmenden Formkörper verpreßt wird.

Formkörper dieser Art sind bekannt und beispielsweise in der US-4,985,163, beschrieben. Sie enthalten mikroporöses, oxidisches anorganisches Material, beispielsweise pyrogen erzeugte Kieselsäuren, einschließlich Lichtbogenkieselsäuren, Fällungskieselsäuren oder Siliciumdioxidaerogele sowie analog hergestellte Aluminiumoxide. Zur Erzielung guter Wärmeisoliereigenschaften besitzt das Material sehr hohe spezifische Oberflächen, die vorzugsweise im Bereich von 50 - 700 m²/g liegen. Bedingt durch diese großen Oberflächen ist das Adsorptionsvermögen gegenüber polaren Substanzen sehr stark ausgeprägt, so daß das Material in natürlicher Atmosphäre begierig Wasser aufnimmt. Gleiches Verhalten zeigen auch die daraus hergestellten wärmedämmenden Formkörper, die insbesondere während der Lagerung und des Gebrauchs Feuchtigkeit aufnehmen. Wenn ein solcher Formkörper im praktischen Einsatz innerhalb kurzer Zeit einer hohen thermischen Energie ausgesetzt wird, entsteht explosionsartig Wasserdampf, der die Struktur des Formkörpers zerstört. Dieser Effekt tritt beispielsweise bei wärmedämmenden Formkörpern auf, die als Wärmeisolierung in Strahlungsheizungen für Keramikkochfelder verwendet werden, wobei die Strahlungsheizungen typischerweise in 1 bis 5 Sekunden zum Glühen gebracht werden.

Es besteht daher die Notwendigkeit, für eine Erhöhung der Gasdurchlässigkeit in solchen Formkörpern zu sorgen, insbesondere für die Erhöhung der Wasserdampfdiffusion vom Innern zur Oberfläche des Formkörpers, und zu vermeiden, daß Überdruck im Innern des Formkörpers auftritt, der die Struktur des Formkörpers zerstören würde.

Gemäß der EP-618399 A1 werden zu diesem Zweck mit einem Werkzeug Kanalporen mechanisch in die Oberfläche des Formkörpers getrieben. Es hat sich aber herausgestellt, daß dieses Verfahren insbesondere dann Probleme bereitet, wenn die Oberfläche des Formkörpers nicht glatt, sondern strukturiert ist und beispielsweise Rillen, Gräben oder sonstige Ausbuchtungen besitzt. In diesen Fällen läßt es sich nur schwer vermeiden, daß beim Anbringen der Kanalporen beispielsweise im Rillenboden oder am Rillenrand Ausbrüche oder Abplatzungen hervorgerufen werden, die das Formteil für den vorgesehenen Verwendungszweck unbrauchbar machen.

Es bestand deshalb die Aufgabe, nach einer einfachen Alternative zu suchen, die gleichwohl zu einem wärmedämmenden Formkörper führt, der schockartig aufgeheizt werden kann, ohne dabei zerstört zu werden.

Gegenstand der Erfindung ist eine Mischung, die 20 bis 99 Gew.-% mikroporöses, oxidisches anorganisches Material, 0 bis 50 Gew.-% Trübungsmittel, 0 bis 50 Gew.-% Fasermaterial und 0 bis 15 Gew.-% anorganisches Bindematerial enthält und gekennzeichnet ist durch einen brennnbaren Bestandteil, der bei einer Wärmebehandlung unter Zurücklassung von Poren nahezu rückstandsfrei verbrennt. Gegenstand der Erfindung ist auch ein Verfahren zur Herstelllung eines wärmedämmenden Formkörpers aus dieser Mischung.

Ein aus der Mischung hergestellter Formkörper behält selbst nach extremer Wasseraufnahme bei schockartigem Erhitzen seine Struktur bei, ohne daß seine wärmedämmenden Eigenschaften reduziert werden. Im Vergleich mit Formkörpern gemäß der eingangs genannten EP-618399 A1 entfällt bei der Herstellung von Formkörpern gemäß der Erfindung das aufwendige Anbringen von Kanalporen und das damit verbundene Risiko verminderter Ausbeuten.

Die zur Herstellung des Formkörpers verwendete Mischung hat folgende Zusammensetzung, wobei sich die Komponenten immer zu 100 Gew.-% ergänzen:
- 20 - 99 Gew.-%: mikroporöses, oxidisches anorganisches Material
- 0 - 50 Gew.-%: Trübungsmittel
- 0 - 50 Gew.-%: Fasermaterial
- 0 - 15 Gew.-%: anorganisches Bindematerial
- 1 - 20 Gew.-%: eines brennbaren Bestandteils.

Eine bevorzugte Zusammensetzung ist:
- 30 - 89 Gew.-%: mikroporöses, oxidisches anorganisches Material
- 8 - 50 Gew.-%: Trübungsmittel
- 1 - 20 Gew.-%: Fasermaterial
- 0 - 5 Gew.-%: anorganisches Bindematerial
- 2 - 12 Gew.-%: eines brennbaren Bestandteils.

Besonders gute Ergebnisse werden mit folgenden Zusammensetzungen erreicht:
- 30 - 74 Gew.-%: mikroporöses, oxidisches anorganisches Material
- 20 - 40 Gew.-%: Trübungsmittel
- 2 - 10 Gew.-%: Fasermaterial
- 0 - 3 Gew.-%: anorganisches Bindematerial
- 4 - 10 Gew.-%: eines brennbaren Bestandteils.

Der brennbare Bestandteil der Mischung muß während einer Wärmebehandlung, die zur Herstellung eines wärmedämmenden Formkörpers notwendig ist, nahezu rückstandsfrei verbrennen. Er wird vorzugsweise aus einer Gruppe von Stoffen ausgewählt, die Holz, Papier, Zellstoff, Stärke, Wachse, Proteine, brennbare Kunststoffe und beliebige Mischungen einzelner oder mehrerer der genannten Stoffe umfaßt. Der brennbare Bestandteil belegt 1 bis 15 % des Volumens der Mischung, wobei die Größe (maximale Längenausdehnung) der Partikel des brennbaren Bestandteils im Bereich von 0,1 bis 3 mm liegt. Die Partikel sind vorzugsweise faserförmig oder kornformig, wobei auch Mischungen faser- und kornförmiger Partikel verwendet werden können. Der wärmedämmende Formkörper weist Poren auf, die einen entsprechenden Anteil von 1 bis 15 % am Gesamtvolumen des Formkörpers haben und gleichmäßig und ohne Vorzugsrichtung verteilt sind.

Als mikroporöses, oxidisches anorganisches Material wird vorzugsweise ein Stoff verwendet, der aus einer Gruppe ausgewählt ist, die feinteilige, pyrogen erzeugte Kieselsäuren, einschließlich Lichtbogenkieselsäuren, alkaliarme Fällungskieselsäuren, Siliciumdioxidaerogele, analog hergestellte Aluminiumoxide und Mischungen einzelner oder mehrere der genannten Stoffe umfaßt. Vorzugsweise werden pyrogen erzeugte Kieselsäure, Aluminiumoxid oder Mischungen davon verwendet. Das feinteilige Material weist eine spezifische Oberfläche nach BET von vorzugsweise 50 - 700 m²/g, insbesondere 70-400 m²/g, auf.

Beispiele für Trübungsmittel sind Ilmenit, Titandioxid, Siliciumcarbid, Eisen-II-Eisen-III-Mischoxid, Chromdioxid, Zirkonoxid, Mangandioxid, Eisenoxid, Siliciumdioxid, Aluminiumoxid und Zirkonsilikat, sowie deren Mischungen. Vorzugsweise werden Ilmenit und Zirkonsilikat verwendet. Die Trübungsmittel weisen vorteilhafterweise ein Absorptionsmaximum im Infrarotbereich zwischen 1,5 und 10 µm auf.

Beispiele für Fasermaterialien sind Glaswolle, Steinwolle, Basaltwolle, Schlackenwolle und Fasern, wie sie aus Schmelzen gewonnen werden (beispielsweise durch Blasen, Schleudern oder Ziehen), die Aluminium- und/oder Siliciumdioxid enthalten, beispielsweise Quarzglasfasern, keramische Fasern, Fasern mit einem Gehalt an SiO₂ von mindestens 96 Gew.-% und Glasfasern wie E-Glasfasern und R-Glasfasern, sowie Mischungen einer oder mehrerer der genannten Faserarten. Vorzugsweise werden Quarzglasfasern, keramische Fasern oder Glasfasern verwendet. Sie besitzen typischerweise einen Durchmesser von 0,1 bis 15 µm und eine Länge von 1 bis 25 mm.

Als anorganisches Bindematerial können alle Bindemittel verwendet werden, deren Einsatz in wärmedämmenden Formkörpern bekannt ist und die mikroporöses, oxidisches anorganisches Material enthalten. Beispiele solcher Bindemittel sind in der US-A 4,985,163 offenbart, auf die in diesem Zusammenhang ausdrücklich verwiesen wird. Vorzugsweise werden Boride des Aluminiums, des Titans, des Zirkons, des Calciums, Silicide, wie Calciumsilicid und Calcium-Aluminium-Silicid, insbesondere Borcarbid eingesetzt. Beispiele für weitere Bestandteile sind basische Oxide, insbesondere Magnesiumoxid, Calciumoxid oder Bariumoxid.

Ein wärmedämmender Formkörper, der gemäß der vorliegenden Erfindung hergestellt wird, hat die folgenden physikalischen Kenngrößen:
Dichte: 250 - 400 g/l
Biegefestigkeit > 0,1 N/mm²
Druckfestigkeit > 0,5 N/mm²
Wärmeleitzahl < 0,030 W/mK
Elektrischer Widerstand > 2000 MΩ

Seine Herstellung umfaßt folgende Verfahrensschritte:
I. Gegebenenfalls Vorverdichten der Mischung bei Drücken von 1 bis 5 bar, insbesondere 2 bar oder ungefähr 2 bar. Verpressen der Mischung in die gewünschte Form bei Enddrücken von 5 bis 30 bar, wobei die Dicke der resultierenden Formen vorzugsweise 10 bis 35 mm, insbesondere 10 bis 15 mm, beträgt;
II. Erhitzen des verpreßten Formkörpers bei Temperaturen von 500 bis 900°C bis der brennbare Bestandteil der Mischung unter Zurücklassung von Poren nahezu rückstandsfrei verbrannt ist. Bei dieser Wärmebehandlung findet gleichzeitig eine Härtung des Formkörpers statt.

Entsprechend hergestellte Formkörper werden besonders bevorzugt als wärmedämmendes Material in Strahlungsheizungen zur Beheizung von Platten, insbesondere Glaskeramikplatten und in Heizungen von Öfen, insbesondere Backöfen, verwendet, wobei die Strahlungsheizungen als Heizstrahler (mit einem Heizdraht oder Heizband als Wärmequelle), als Halogenheizstrahler (mit einer Halogenlampe als Wärmequelle) oder als Kombination von Heizstrahler und Halogenheizstrahler ausgebildet sein können.

### Vergleichsbeispiel

Eine homogene Mischung mit der Zusammensetzung
- 58 Gew.-%: pyrogen erzeugte Kieselsäure
- 35 Gew.-%: Titanoxid
- 6 Gew.-%: keramische Fasern
- 1 Gew.-%: Borcarbid
wurde vorverdichtet und zu einem Formteil mit 198 mm Durchmesser und 13 mm Dicke und einer Dichte von 340 g/l verpreßt und 1 Stunde in einem Durchlaufofen bei Temperaturen bis zu 850 °C wärmebehandelt. Der erhaltene Formkörper wurde bei 30°C in 93 % relativer Luftfeuchtigkeit 40 Stunden gelagert. Die Wasseraufnahme betrug 11 Gew.-%. Der Formkörper wurde mittels eines über seiner Oberfläche montierten Heizelements mit einer Heizleistung von 1800 W über 45 s lang schockartig beheizt. Bei dieser Behandlung platzte der Formkörper im Inneren auf, weil der entstandene Wasserdampf-Druck nicht ausreichend schnell abgebaut werden konnte.

### Beispiel 1

Eine homoge Mischung mit der Zusammensetzung
- 54 Gew.-%: pyrogen erzeugte Kieselsäure
- 33 Gew.-%: Titandioxid
- 6 Gew.-%: keramische Faser
- 1 Gew.-%: Borcarbid
- 6 Gew.-%: Holzfasern (Handelsname: Lignocel MK 300, Hersteller: Rettenmaier GmbH in Ellwangen, Deutschland)
wurde, wie im Vergleichsbeispiel beschrieben, zu einem Formteil verpreßt und in einem Durchlaufofen 1,5 Stunden lang bei Temperaturen bis 850 °C wärmebehandelt. Der entstandene Formkörper wurde analog zum Vergleichsbeispiel einer feuchten Umgebung ausgesetzt und danach schockartig beheizt. Bei diesem Versuch bewirkte die Hitzebehandlung keine Beschädigung des Formkörpers.

### Beispiel 2

Eine homogen vermischte Wärmedämmmischung mit der Zusammensetzung
- 56 Gew.-%: pyrogen erzeugte Kieselsäure
- 34 Gew.-%: Titandioxid
- 3 Gew.-%: Glasfasern mit Durchmessern von 5 µm und einem SiO₂-Gehalt von mindestens 96 Gew.-%
- 1 Gew.-%: Borcarbid
- 6 Gew.-%: Zellstoff (Handelsname: Lignocel F9, Hersteller: Rettenmaier GmbH in Ellwangen, Deutschland)
wurde wie im Beispiel 1 beschrieben behandelt. Die schockartige Hitzebehandlung des hergestellten Formkörpers zeigte auch in diesem Fall keine zerstörerische Wirkung.

## Patentansprüche

1. Mischung zur Herstellung eines wärmedämmenden Formkörpers enthaltend 20 bis 99 Gew.-% mikroporöses, oxidisches anorganisches Material, 0 bis 50 Gew.-% Trübungsmittel, 0 bis 50 Gew.-% Fasermaterial und 0 bis 15 Gew.-% anorganisches Bindematerial, gekennzeichnet durch einen brennbaren Bestandteil, der bei einer Wärmebehandlung unter Zurücklassung von Poren nahezu rückstandsfrei verbrennt.

2. Mischung nach Anspruch 1, dadurch gekennzeichnet, daß der Anteil des brennbaren Bestandteils an der Mischung 1 bis 20 Gew.-% beträgt.

3. Mischung nach Anspruch 1 oder Anspruch 2, dadurch gekennzeichnet, daß der brennbare Bestandteil aus einer Gruppe ausgewählt ist, die Holz, Papier, Zellstoff, Stärke, Wachse, Proteine, brennbare Kunststoffe und Mischungen der genannten Stoffe umfaßt.

4. Mischung nach einem der Ansprüche 1 bis 3, dadurch gekennzeichnet, daß das mikroporöse, oxidische anorganische Material aus einer Gruppe ausgewählt ist, die feinteilige, pyrogen erzeugte Kieselsäuren, einschließlich Lichtbogenkieselsäuren, alkaliarme Fällungskieselsäuren, Siliciumdioxidaerogele, analog hergestellte Aluminiumoxide und Mischungen der genannten Stoffe umfaßt.

5. Mischung nach einem der Ansprüche 1 bis 4, dadurch gekennzeichnet, daß das Fasermaterial aus einer Gruppe ausgewählt ist, die Glaswolle, Steinwolle, Basaltwolle, Schlackenwolle, Quarzglasfasern, keramische Fasern und Glasfasern, insbesondere E- und R-Glasfasern, und Mischungen der genannten Fasern umfaßt.

6. Verfahren zur Herstellung eines wärmedämmenden Formkörpers durch Verpressen und Wärmebehandeln einer Mischung enthaltend 20 bis 99 Gew.-% mikroporöses, oxidisches anorganisches Material, 0 bis 50 Gew.-% Trübungsmittel, 0 bis 50 Gew.-% Fasermaterial und 0 bis 15 Gew.-% anorganisches Bindematerial, dadurch gekennzeichnet, daß der Mischung ein brennbarer Bestandteil zugemischt wird, der im Laufe der Wärmebehandlung unter Zurücklassung von Poren nahezu rückstandsfrei verbrennt.

7. Verfahren nach Anspruch 6, dadurch gekennzeichnet, daß die bei der Wärmebehandlung geschaffenen Poren 1 bis 15 % des Volumens des Formkörpers ausfüllen.

8. Verwendung des wärmedämmenden Formkörpers nach Anspruch 6 oder Anspruch 7 in Strahlungsheizungen zur Beheizung von Platten und Öfen.
